# FASCICULE DE BREVET EUROPEEN

(11) **EP 4 306 415 B1**
(45) Date de publication et mention de la délivrance du brevet: **18.12.2024**
(21) Numéro de dépôt: 23179000.7
(22) Date de dépôt: 13.06.2023
(51) Int. Cl.: B64D 13/06

(54) **DISPOSITIF DE CONDITIONNEMENT D'AIR D'UN AÉRONEF COMPORTANT UN MÉLANGEUR DE GRANDE CAPACITÉ, PROCÉDÉ DE MONTAGE D'UN TEL DISPOSITIF ET AÉRONEF ÉQUIPÉ D'UN TEL DISPOSITIF DE CONDITIONNEMENT D'AIR**
FLUGZEUGKLIMAANLAGE MIT EINEM MISCHER MIT HOHER KAPAZITÄT, VERFAHREN ZUR MONTAGE SOLCH EINER VORRICHTUNG UND FLUGZEUG MIT SOLCH EINER KLIMAANLAGE
AIR CONDITIONING DEVICE FOR AN AIRCRAFT COMPRISING A LARGE MIXER, METHOD FOR MOUNTING SUCH A DEVICE AND AIRCRAFT EQUIPPED WITH SUCH AN AIR CONDITIONING DEVICE

(30) Priorité: 13.07.2022 FR 2207249
(43) Date de publication de la demande: 17.01.2024
(73) Titulaire: AIRBUS OPERATIONS (S.A.S.), 31060 Toulouse (FR)
(72) Inventeur: ARMERO, Bernardo, 31060 TOULOUSE Cedex 9 (FR)
(74) Mandataire: Airbus-OPS SAS

(56) Documents cités:
- EP-A1- 4 008 636
- US-A- 4 517 813
- US-A- 4 942 739
- US-A- 5 634 964
- US-A1- 2009 017 742

## Description

La présente demande se rapporte à un dispositif de conditionnement d'air d'un aéronef comprenant un mélangeur de grande capacité, à un procédé de montage d'un tel dispositif de conditionnement d'air ainsi qu'à un aéronef équipé dudit dispositif de conditionnement d'air.

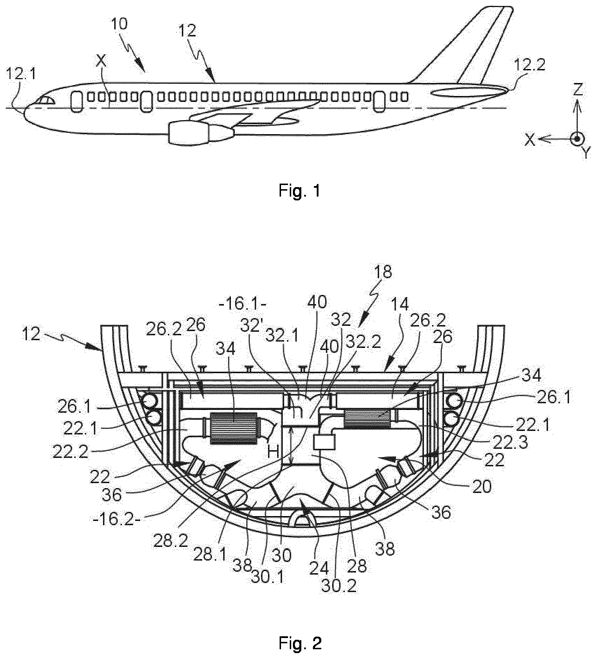

Selon un mode de réalisation visible sur les figures 1 et 2, un aéronef 10 comprend un fuselage 12, qui s'étend d'une pointe avant 12.1 jusqu'à une pointe arrière 12.2 ainsi qu'un plancher 14 scindant l'intérieur du fuselage 12 en une zone supérieure 16.1 située au-dessus du plancher 14 et une zone inférieure 16.2 située au-dessous du plancher 14.

Pour la suite de la description, une direction longitudinale X correspond à une direction qui passe approximativement par la pointe avant 12.1 et la pointe arrière 12.2 et qui est sensiblement horizontale lorsque l'aéronef est au sol. Un plan transversal est un plan perpendiculaire à la direction longitudinale. Une direction transversale et horizontale Y est horizontale et perpendiculaire à la direction longitudinale X. Une direction transversale et verticale Z est verticale et perpendiculaire à la direction longitudinale X.

L'aéronef 10 comprend au moins une zone d'air conditionné 18, comme une cabine de passagers située dans la zone supérieure 16.1 par exemple, ainsi qu'un dispositif de conditionnement d'air 20 permettant de réguler, à des conditions déterminées, l'air présent dans la zone d'air conditionné 18.

Ce dispositif de conditionnement d'air comprend un circuit de prélèvement 22 configuré pour prélever l'air présent dans la zone d'air conditionné 18, un mélangeur 24 configuré pour mélanger l'air prélevé dans la zone d'air conditionné 18 et un air régulé provenant d'une source d'air régulé ainsi qu'un circuit de distribution 26 configuré pour réinjecter l'air sortant du mélangeur 24 dans la zone d'air conditionné 18.

Selon un mode de réalisation visible sur la figure 2, le mélangeur 24 est positionné dans la zone inférieure 16.2, au-dessous du plancher 14. II comprend
a. un corps 28 sensiblement cylindrique, positionné verticalement, présentant une extrémité inférieure 28.1 orientée vers le fuselage 12 et une extrémité supérieure 28.2 orientée vers le plancher 14 ;
b. un collecteur 30 positionné dans le prolongement de l'extrémité inférieure 28.1 du corps 28, au-dessous de cette dernière, en forme de Y inversé présentant deux entrées d'air 30.1, 30.2 reliées au circuit de prélèvement 22 et situées au-dessous de l'extrémité inférieure 28.1 du corps 28 ;
c. deux échappements 32, 32' positionnés dans le prolongement de l'extrémité supérieure 28.2 du corps 28, au-dessus de cette dernière, en forme de Y présentant deux sorties d'air 32.1, 32.2 reliées au circuit de distribution 26 et située au-dessus de l'extrémité supérieure 28.2 du corps 28.

Le circuit de prélèvement 22 comprend plusieurs conduits longitudinaux 22.1 qui s'étendent parallèlement à la direction longitudinale, positionnés juste au-dessous du plancher 14, ainsi que, pour chaque entrée d'air 30.1, 30.2 du mélangeur 24, une portion de circuit 22.3, 22.4 intégrant un filtre 34 et un ventilateur 36 configuré pour générer un flux d'air dans le circuit de prélèvement 22 en direction du mélangeur 24. Le circuit de prélèvement 22 comprend également, pour chaque entrée d'air 30.1, 30.2 du mélangeur 24, un coude amont 38 reliant l'entrée d'air 30.1, 30.2 et la portion de circuit 22.3, 22.4 correspondante. Pour limiter les pertes de charge, chaque coude amont 38 présente un rayon de courbure relativement important.

Le circuit de distribution 26 comprend plusieurs conduits longitudinaux 26.1 qui s'étendent parallèlement à la direction longitudinale, positionnés juste au-dessous du plancher 14, ainsi que, pour chaque sortie d'air 32.1, 32.2 du mélangeur 24, un tronçon transversal 26.2 positionné approximativement dans un plan transversal, reliant une des sorties d'air 32.1, 32.2 et au moins un conduit longitudinal 26.1. Chaque sortie d'air 32.2, 32.2 présente un coude aval 40 avec un rayon de courbure relativement important pour limiter les pertes de charge.

Selon un mode opératoire, les différentes parties du mélangeur 24 et les différents tronçons des circuits de prélèvement et de distribution 22, 26 sont introduits un à un dans la zone inférieure 16.2, puis reliés les uns aux autres et aux structures du fuselage 12 et du plancher 14.

Compte tenu des formes courbes du collecteur 30, de l'échappement 32 ainsi que des coudes amont et aval 38, 40, la hauteur H du corps 28 du mélangeur 24 (correspondant à la distance séparant les extrémités inférieure et supérieure 28.1, 28.2) est limitée et peut difficilement être augmentée. Les capacités du mélangeur 24 étant liées à sa hauteur H, le volume d'air traité par le mélangeur 24, pour une dimension sous le plancher 14 donnée, peut difficilement être augmenté malgré les besoins en air frais grandissant.

Le document US5634964 décrit un mélangeur d'air pour fournir de l'air remis en circulation à une cabine d'un aéronef selon l'art antérieur.

Le document EP4008636 décrit un système de contrôle de l'environnement pour contrôler un flux d'air dans un aéronef selon l'art antérieur. Le document US 4942739 divulgue un mélangeur selon l'art antérieur.

La présente invention vise à remédier à tout ou partie des inconvénients de l'art antérieur.

A cet effet, l'invention a pour objet un dispositif de conditionnement d'air comprenant un circuit de prélèvement configuré pour prélever de l'air présent dans une zone d'air conditionné, un mélangeur configuré pour mélanger l'air prélevé dans la zone d'air conditionné et un air régulé provenant d'une source d'air régulé ainsi qu'un circuit de distribution configuré pour réinjecter l'air sortant du mélangeur dans la zone d'air conditionné, le mélangeur comportant un corps s'étendant entre des extrémités inférieure et supérieure, au moins une entrée d'air reliée au circuit de prélèvement et positionnée à proximité de l'extrémité inférieure ainsi qu'au moins une sortie d'air reliée au circuit de distribution et positionnée à proximité de l'extrémité supérieure.

Selon l'invention, au moins un orifice parmi l'entrée d'air et la sortie d'air est positionné entre les extrémités inférieure et supérieure, à proximité d'une des extrémités inférieure et supérieure obturée par une paroi transversale.

Selon l'invention, le corps du mélangeur comprend une partie supérieure comportant l'extrémité supérieure du corps et un premier plan de jonction, une partie inférieure comportant l'extrémité inférieure du corps et un deuxième plan de jonction ainsi qu'un système de raccordement déformable reliant de manière étanche les parties supérieure et inférieure.

Cette solution permet, à dimension sous le plancher constante, d'accroître la hauteur du corps du mélangeur et in fine sa capacité de production d'air conditionné.

Le fait de diviser le corps du mélangeur permet de pouvoir monter les parties supérieure et inférieure l'une après l'autre, d'accoler la partie supérieure contre le plancher et la partie inférieure contre le fuselage, puis de relier les deux parties inférieure et supérieure dans un espace distant du fuselage et du plancher, plus accessible. Cette solution contribue à optimiser la hauteur du corps du mélangeur.

Ce système de raccordement déformable autorise des mouvements relatifs entre les parties supérieure et inférieure assemblées et permet de réduire les transferts de charge entre ces parties supérieure et inférieure assemblées.

Selon une autre caractéristique, le mélangeur comprend plusieurs entrées d'air et plusieurs sorties d'air, toutes les entrées d'air et toutes les sorties d'air étant positionnées entre les extrémités inférieure et supérieure. En complément, les extrémités inférieure et supérieure sont obturées respectivement par des parois transversales inférieure et supérieure.

Selon une autre caractéristique, le corps du mélangeur comporte une paroi latérale cylindrique, chaque sortie d'air étant positionnée à proximité de l'extrémité supérieure du corps, sur la paroi latérale.

Selon une autre caractéristique, le mélangeur comprend au moins une excroissance communiquant avec le corps, positionnée à proximité de l'extrémité inférieure du corps, l'excroissance présentant une surface supérieure orientée vers l'extrémité supérieure du corps, au moins une entrée d'air du mélangeur étant positionnée sur la surface supérieure de l'excroissance.

Selon une autre caractéristique, le corps étant orienté verticalement, les premier et deuxième plans de jonction sont inclinés par rapport à un plan horizontal.

Selon une autre caractéristique, le système de raccordement déformable comprend :
a. un premier manchon souple, enserrant les parties supérieure et inférieure, présentant une première zone de recouvrement recouvrant la partie supérieure, une deuxième zone de recouvrement recouvrant la partie inférieure et une zone intermédiaire reliant les première et deuxième zones de recouvrement,
b. un deuxième manchon entourant le premier manchon présentant une rigidité supérieure à celle du premier manchon et un diamètre ajustable, comportant un premier tronçon d'extrémité recouvrant au moins partiellement la première zone de recouvrement du premier manchon ainsi qu'un deuxième tronçon d'extrémité recouvrant au moins partiellement la deuxième zone de recouvrement du premier manchon,
c. un premier anneau déformable positionné entre la première zone de recouvrement du premier manchon et le premier tronçon d'extrémité du deuxième manchon,
d. un deuxième anneau déformable positionné entre la deuxième zone de recouvrement du premier manchon et le deuxième tronçon d'extrémité du deuxième manchon.

Selon une autre caractéristique, le système de raccordement déformable comprend au moins une première bande adhésive intercalée entre la partie supérieure et la première zone de recouvrement du premier manchon ainsi qu'au moins une deuxième bande adhésive intercalée entre la partie inférieure et la deuxième zone de recouvrement du premier manchon.

Selon une autre caractéristique, le deuxième manchon comprend un premier logement périphérique positionné au niveau du premier tronçon d'extrémité et configuré pour loger le premier anneau déformable ainsi qu'un deuxième logement périphérique positionné au niveau du deuxième tronçon d'extrémité et configuré pour loger le deuxième anneau déformable.

Selon une autre caractéristique, le dispositif de conditionnement d'air comprend un premier sous-ensemble comportant la partie supérieure du mélangeur et une première partie du circuit de distribution, ce circuit de distribution comportant une deuxième partie non incluse dans le premier sous-ensemble, ainsi qu'un deuxième sous-ensemble comportant la partie inférieure du mélangeur et une première partie du circuit de prélèvement, ce circuit de prélèvement comportant une deuxième partie non incluse dans le deuxième sous-ensemble. En complément, chaque circuit de prélèvement ou de distribution comporte des premier et deuxième tronçons positionnés respectivement dans les première et deuxième parties du circuit de prélèvement ou de distribution, le dispositif de conditionnement d'air comprenant un système de raccordement déformable reliant les premier et deuxième tronçons.

L'invention a également pour objet un aéronef comprenant un dispositif de conditionnement d'air selon l'une des caractéristiques précédentes.

Selon une autre caractéristique, le dispositif de conditionnement d'air présentant des premier et deuxième sous-ensembles, l'aéronef comprend une structure et au moins un système de liaison réglable en longueur reliant le premier ou deuxième sous-ensemble et la structure de l'aéronef.

L'invention a également pour objet un procédé de montage d'un dispositif de conditionnement d'air dans un aéronef comprenant une structure. Selon l'invention, le procédé comprend une étape d'assemblage des premier et deuxième sous-ensembles à l'extérieur de l'aéronef, une étape de montage des deuxièmes parties des circuits de prélèvement et de distribution, une étape de mise en place du premier sous-ensemble dans l'aéronef et de fixation du premier sous-ensemble à la structure de l'aéronef puis une étape de mise en place du deuxième sous-ensemble dans l'aéronef, une étape de fixation du deuxième sous-ensemble à la structure de l'aéronef, une étape de raccordement des parties supérieure et inférieure du corps du mélangeur, une étape de raccordement des premier et deuxième tronçons des première et deuxième parties des circuits de prélèvement et de distribution.

D'autres caractéristiques et avantages ressortiront de la description de l'invention qui va suivre, description donnée à titre d'exemple uniquement, en regard des dessins annexés parmi lesquels :
Fig. 1 est une vue latérale d'un aéronef,
Fig. 2 est une vue de face d'un dispositif de conditionnement d'air illustrant un mode de réalisation de l'art antérieur,
Fig. 3 est une coupe transversale d'une partie du fuselage d'un aéronef,
Fig. 4 est une vue de face d'un sous-ensemble d'un dispositif de conditionnement d'air illustrant un mode de réalisation de l'invention,
Fig. 5 est une vue de face d'un autre sous-ensemble d'un dispositif de conditionnement d'air illustrant un mode de réalisation de l'invention,
Fig. 6 est une vue de face d'un dispositif de conditionnement d'air illustrant un mode de réalisation de l'invention,
Fig. 7 est une vue latérale d'un mélangeur du dispositif de conditionnement d'air visible sur la figure 6,
Fig. 8 est une coupe d'un système de raccordement de deux parties d'un mélangeur d'un dispositif de conditionnement d'air illustrant un mode de réalisation de l'invention,
Fig. 9 est une coupe d'un système de raccordement de deux conduits d'un dispositif de conditionnement d'air illustrant un mode de réalisation de l'invention,
Fig. 10 est une représentation schématique d'un système de liaison entre une partie d'un dispositif de conditionnement d'air et une structure d'un aéronef illustrant un mode de réalisation de l'invention,
Fig. 11 est une représentation schématique d'un système de liaison entre une partie d'un dispositif de conditionnement d'air et une structure d'un aéronef illustrant un autre mode de réalisation de l'invention.

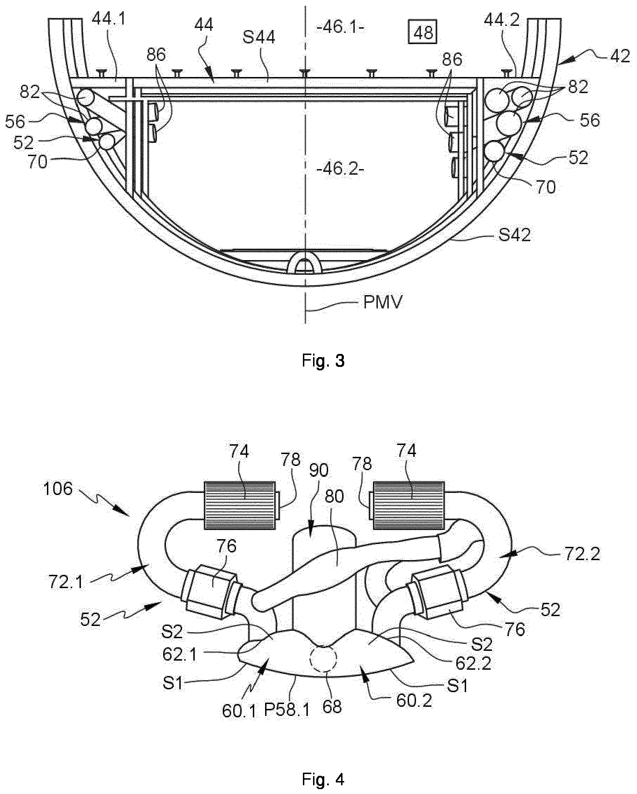

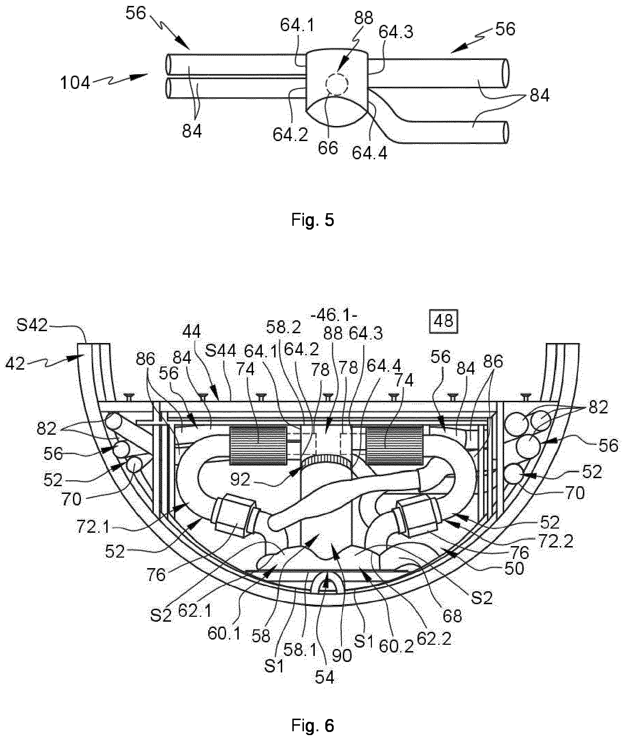

Selon un mode de réalisation visible sur les figures 3 et 6, un aéronef comprend un fuselage 42 ainsi qu'un plancher 44 scindant l'intérieur du fuselage 42 en une zone supérieure 46.1 située au-dessus du plancher 44 et une zone inférieure 46.2 située au-dessous du plancher 44. Le fuselage 42 comprend une structure de fuselage S42 présentant des cadres positionnés dans des plans transversaux. Le fuselage 42 présente un plan médian vertical PMV. Le plancher 44 comprend une structure de plancher S44 présentant des poutres transversales et longitudinales. Le plancher 44 s'étend entre des premier et deuxième bords longitudinaux 44.1, 44.2 reliés au fuselage 42. Ainsi, la structure de l'aéronef comprend la structure de fuselage S42 et la structure de plancher S44.

L'aéronef comprend au moins une zone d'air conditionné 48, comme une cabine de passagers située dans la zone supérieure 46.1 par exemple, ainsi qu'un dispositif de conditionnement d'air 50 permettant de réguler, à des conditions déterminées, l'air présent dans la zone d'air conditionné 48.

Ce dispositif de conditionnement d'air 50 comprend un circuit de prélèvement 52 configuré pour prélever l'air présent dans la zone d'air conditionné 48, un mélangeur 54 configuré pour mélanger l'air prélevé dans la zone d'air conditionné 48 et un air régulé provenant d'une source d'air régulé (non représentée) ainsi qu'un circuit de distribution 56 configuré pour réinjecter l'air sortant du mélangeur 54 dans la zone d'air conditionné 48.

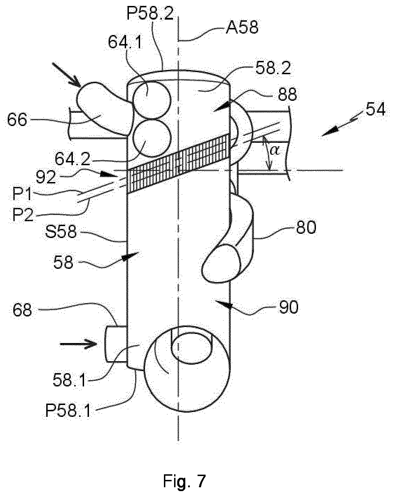

Comme illustré en détails sur la figure 7, le mélangeur 54 présente un corps 58 qui s'étend entre une extrémité inférieure 58.1 positionnée à proximité du fuselage 42 et une extrémité supérieure 58.2 positionnée à proximité du plancher 44. Le corps 58 comporte une paroi latérale S58 cylindrique qui présente un axe A58 sensiblement vertical, une paroi transversale inférieure P58.1 orientée vers le fuselage 42 obturant l'extrémité inférieure 58.1 ainsi qu'une paroi transversale supérieure P58.2 orientée vers le plancher 44 obturant l'extrémité supérieure 58.2. Selon une configuration, l'axe A58 est positionné dans le plan médian vertical PMV de l'aéronef.

Le mélangeur 54 comprend également des première et deuxième excroissances 60.1, 60.2 en saillie par rapport à la paroi latérale S58, positionnées au niveau de l'extrémité inférieure 58.1, diamétralement opposées et orientées selon une direction transversale. Les première et deuxième excroissances 60.1, 60.2 sont sensiblement symétriques par rapport à un plan vertical longitudinal passant par l'axe A58 du corps 58 du mélangeur 54. Chacune d'elles présente une surface inférieure S1 orientée vers le bas, en direction du fuselage 42, ainsi qu'une surface supérieure S2 orientée vers le haut en direction du plancher 44.

Chacune des première et deuxième excroissances 60.1, 60.2 comprend un volume intérieur qui communique avec le volume intérieur du corps 58. Chacune d'elles présente une section horizontale sensiblement égale ou légèrement inférieure à une section horizontale du corps 58.

Les formes de la paroi transversale inférieure P58.1 du corps 58 et des surfaces inférieures S1 des première et deuxième excroissances 60.1, 60.2 sont configurées pour épouser la courbure du fuselage 42.

Le mélangeur 54 comprend au moins une entrée d'air 62.1 reliée au circuit de prélèvement 52, au moins une sortie d'air 64.1 reliée au circuit de distribution 56 ainsi qu'au moins une admission d'air régulé 66 reliée à la source d'air régulé.

Chaque entrée d'air 62.1 est positionnée au niveau de la surface supérieure S2 d'une excroissance 60.1, 60.2 du mélangeur 54. Ainsi, la paroi transversale inférieure P58.1 peut être rapprochée au plus près du fuselage 42, ce qui permet d'accroître la hauteur du corps 58 du mélangeur 54.

Selon un agencement, le mélangeur 54 comprend des première et deuxième entrées d'air 62.1, 62.2, la première entrée d'air 62.1 étant positionnée au niveau de la surface supérieure S2 de la première excroissance 60.1, la deuxième entrée d'air 62.2 étant positionnée au niveau de la surface supérieure S2 de la deuxième excroissance 60.2. Selon une configuration, les première et deuxième entrées d'air 62.1, 62.2 sont sensiblement symétriques par rapport à un plan vertical longitudinal passant par l'axe A58 du corps 58 du mélangeur 54.

Ainsi, le mélangeur 54 comprend au moins une excroissance 60.1, 60.2 communiquant avec le corps 58 et positionnée à proximité de l'extrémité inférieure 58.1 du corps 58, l'excroissance 60.1, 60.2 présentant un volume configuré pour limiter les pertes de charge, une surface inférieure S1 orientée vers le fuselage 42 ainsi qu'une surface supérieure S2 opposée à la surface inférieure S1, orientée vers l'extrémité supérieure 58.2 du corps 58 en direction du plancher 44, au moins une entrée d'air 62.1, 62.2 étant positionnée sur la surface supérieure S2. Généralement, le mélangeur comprend pour chaque entrée d'air 62.1, 62.2 une excroissance 60.1, 60.2, l'entrée d'air 62.1, 62.2 étant positionnée sur la surface supérieure S2 de l'excroissance 60.1, 60.2.

Selon un mode de réalisation visible sur les figures 6 et 7, le mélangeur 54 comprend également une admission d'air auxiliaire 68 reliée à une prise d'air permettant de relier le mélangeur 54 à une source d'air conditionné (non représentée) lorsque l'aéronef est au sol. Selon une configuration, cette admission d'air auxiliaire 68 peut être prévue au niveau d'une des excroissances 60.1, 60.2. En variante, comme illustré sur la figure 7, cette admission d'air auxiliaire 68 est positionnée à proximité de l'extrémité inférieure 58.1 du corps 58, au niveau de la paroi latérale S58, décalée radialement par rapport aux première et deuxième entrées d'air 62.1, 62.2. A titre indicatif, l'admission d'air auxiliaire 68 est orientée selon la direction longitudinale.

Selon une particularité de l'invention, chaque sortie d'air 64.1 à 64.4 est positionnée, à proximité de l'extrémité supérieure 58.2 du corps 58, au niveau de la paroi latérale S58. Ainsi, la paroi transversale supérieure P58.2 peut être rapprochée au plus près du plancher 44, ce qui permet d'accroître la hauteur du corps 58 du mélangeur 54.

Selon un agencement, le mélangeur 54 comprend quatre sorties d'air 64.1 à 64.4, positionnées à proximité de l'extrémité supérieure 58.2, des première et deuxième sorties d'air 64.1, 64.2 superposées orientées transversalement vers une première direction, des troisième et quatrième sorties d'air 64.2, 64.3 superposées orientées transversalement vers une deuxième direction opposée à la première direction.

Selon une configuration, l'admission d'air régulé 66 est positionnée au niveau de la paroi latérale S58, à proximité de l'extrémité supérieure 58.2 du corps 58. Selon un agencement, l'admission d'air régulé 66 est orientée selon la direction longitudinale.

Bien entendu, l'invention n'est pas limitée à ces modes de réalisation pour l'échangeur 54. Quel que soit le mode de réalisation, le mélangeur 54 comprend un corps 58 s'étendant entre des extrémités inférieure et supérieure 58.1, 58.2, au moins une entrée d'air 62.1, 62.2 reliée au circuit de prélèvement 52 et positionnée à proximité de l'extrémité inférieure 58.1 ainsi qu'au moins une sortie d'air 64.1 à 64.4 reliée au circuit de distribution 56 et positionnée à proximité de l'extrémité supérieure 58.2, au moins un orifice parmi l'entrée d'air 62.1, 62.2 et la sortie d'air 64.1 à 64.4 étant positionné entre les extrémités inférieure et supérieure 58.1, 58.2, à proximité d'une des extrémités inférieure et supérieure 58.1, 58.2 obturée par une paroi transversale inférieure ou supérieure P58.1, P58.2. Cette solution permet d'optimiser la hauteur du corps 58 du mélangeur 54. Selon une configuration, toutes les entrées d'air 62.1, 62.2 et/ou toutes les sorties d'air 64.1 à 64.4 sont positionnées entre les extrémités inférieure ou supérieure 58.1, 58.2.

Le circuit de prélèvement 52 comprend au moins un conduit de prélèvement longitudinal 70 qui s'étend parallèlement à la direction longitudinale, positionné au-dessous du plancher 44, ainsi qu'au moins une portion de circuit 72.1, 72.2 reliant le conduit longitudinal 70 à une entrée d'air 62.1, 62.2 du mélangeur 54.

Selon une configuration, le circuit de prélèvement 52 comprend plusieurs conduits de prélèvement longitudinaux 70, positionnés juste au-dessous du plancher 44, au moins un conduit de prélèvement longitudinal positionné à proximité de chacun des premier et deuxième bords longitudinaux 44.1, 44.2 du plancher 44.

Selon une configuration, le circuit de prélèvement 52 comprend deux portions de circuit 72.1, 72.2, une première portion de circuit 72.1 reliée à la première entrée d'air 62.1, une deuxième portion de circuit 72.2 reliée à la deuxième entrée d'air 62.2. Les première et deuxième portions de circuit 72.1, 72.2 sont positionnées de part et d'autre du mélangeur 54 et orientées approximativement dans un plan vertical transversal.

Chaque portion de circuit 72.1, 72.2 comprend un filtre 74, un ventilateur 76 configuré pour générer un flux d'air au moins dans le circuit de prélèvement 52 en direction du mélangeur 54 ainsi qu'au moins un premier tronçon de raccordement 78 (représenté partiellement en pointillé sur la figure 6) reliant le filtre 74 à un des conduits de prélèvement longitudinal 70.

Selon un agencement, les première et deuxième portions de circuit 72.1, 72.2 sont approximativement symétriques par rapport à un plan vertical longitudinal passant par l'axe A58 du corps 58 du mélangeur 54.

Bien entendu, l'invention n'est pas limitée à ce mode de réalisation pour le circuit de prélèvement 52. Comme illustré sur les figures 4 et 6, le circuit de prélèvement 52 peut comprendre au moins un conduit 80 aplati et accolé contre le corps 58 du mélangeur 54.

Le circuit de distribution 56 comprend au moins un conduit de distribution longitudinal 82 qui s'étend selon une direction longitudinale, positionné au-dessous du plancher 44, ainsi qu'au moins un tronçon transversal 84 reliant le conduit de distribution longitudinal 82 à une sortie d'air 64.1 à 64.4 du mélangeur 54. Selon une configuration, le circuit de distribution 56 comprend plusieurs conduits de distribution longitudinaux 82, positionnés juste au-dessous du plancher 44, au moins un conduit de distribution longitudinal 82 positionné à proximité de chacun des premier et deuxième bords longitudinaux 44.1, 44.2 du plancher44.

Selon un agencement, le circuit de distribution 56 comprend un tronçon transversal 84 pour chaque sortie d'air 64.1 à 64.4 du mélangeur 54 ainsi que, pour chaque tronçon transversal 84, un conduit de raccordement coudé 86 reliant le tronçon transversal 84 et au moins un conduit de distribution longitudinal 82.

Bien entendu, l'invention n'est pas limitée à ce mode de réalisation pour le circuit de distribution 56.

Selon une configuration, le corps 58 du mélangeur 54 est scindé en deux parties et comprend une partie supérieure 88 comportant l'extrémité supérieure 58.2 du corps 58, toutes les sorties d'air 64.1, 64.4 et l'admission d'air régulé 66, une partie inférieure 90 comportant l'extrémité inférieure 58.1 du corps 58, la (ou les) excroissance(s) 60.1, 60.2 et toutes les entrées d'air 62.1, 62.2 ainsi qu'un système de raccordement déformable 92 reliant de manière étanche les parties supérieure et inférieure 88, 90. Le fait de diviser le corps 58 du mélangeur 54 permet de pouvoir monter les parties supérieure et inférieure 88, 90 l'une après l'autre, d'accoler la partie supérieure 88 contre le plancher 44 et la partie inférieure 90 contre le fuselage 42 puis de relier les deux parties inférieure et supérieure 88, 90 dans un espace distant du fuselage 42 et du plancher 44, plus accessible. Cette solution contribue à optimiser la hauteur du corps 58 du mélangeur 54.

La partie supérieure 88 présente un bord inférieur positionné dans un premier plan de jonction P1. En complément, la partie inférieure 90 présente un bord supérieur positionné dans un deuxième plan de jonction P2. Les premier et deuxième plans de jonction P1, P2 sont sensiblement parallèles.

Selon une configuration, les premier et deuxième plans de jonction P1, P2 sont plus proches de la paroi transversale supérieure P58.2 que de la paroi transversale inférieure P58.1. Ils sont positionnés légèrement décalés vers le bas par rapport à la sortie d'air 64.1 à 64.4 la plus basse. A titre indicatif, la partie supérieure 88 présente une première dimension mesurée selon la direction verticale Z. La partie inférieure 90 présente une deuxième dimension mesurée selon la direction verticale Z comprise entre 2 à 3 fois la première dimension.

Selon un agencement, le corps 58 étant orienté verticalement, les premier et deuxième plans de jonction P1, P2 sont inclinés par rapport à un plan horizontal. Cet agencement facilite l'assemblage des parties supérieure et inférieure 88, 90 dans un espace limité en hauteur. Selon un mode de réalisation, les premier et deuxième plans de jonction P1, P2 forment, dans un plan vertical et longitudinal (XZ), un angle α avec un plan horizontal compris entre 10 et 45°.

Selon une configuration, les premier et deuxième plans de jonction P1 et P2 sont espacés d'une distance D1 supérieure à 5 mm. De préférence, la distance D1 est de l'ordre de 15 mm. Cet espacement permet aux parties supérieure et inférieure 88, 90 de pouvoir bouger l'une par rapport à l'autre.

Selon un mode de réalisation, le système de raccordement déformable 92 est configuré pour autoriser des déplacements relatifs entre les parties supérieure et inférieure 88, 90 rigides.

Ce système de raccordement déformable 92 comprend au moins un premier manchon 94 souple, enserrant les parties supérieure et inférieure 88, 90, présentant une première zone de recouvrement 94.1 recouvrant l'extrémité inférieure de la partie supérieure 88 sur une longueur L1 à partir du premier plan de jonction P1, une deuxième zone de recouvrement 94.2 recouvrant l'extrémité supérieure de la partie inférieure 90 sur une longueur L2 à partir du deuxième plan de jonction P2 et une zone intermédiaire 94.3 reliant les première et deuxième zones de recouvrement 94.1, 94.2. Selon une configuration, le premier manchon 94 est thermorétractable.

Selon un mode de réalisation privilégié, le système de raccordement souple 92 est renforcé et comprend un deuxième manchon 96 entourant le premier manchon 94.

A titre indicatif, les longueurs L1 et L2 sont sensiblement égales à 50 mm.

Selon un mode de réalisation, pour renforcer l'étanchéité entre le premier manchon 94 et les parties supérieure et inférieure 88, 90, le système de raccordement déformable 92 comprend au moins une première bande adhésive 98.1 intercalée entre la partie supérieure 88 et la première zone de recouvrement 94.1 du premier manchon 94, qui s'étend sur toute la périphérie de la partie supérieure 88 ainsi qu'au moins une deuxième bande adhésive 98.2 intercalée entre la partie inférieure 90 et la deuxième zone de recouvrement 94.2 du premier manchon 94, qui s'étend sur toute la périphérie de la partie inférieure 90.

Le deuxième manchon 96 peut être métallique ou en matière plastique et présente une rigidité intermédiaire, plus importante que celle du premier manchon 94 mais moins importante que celle des parties supérieure et inférieure 88, 90. Selon une configuration, le deuxième manchon 96 présente un diamètre ajustable.

Le deuxième manchon 96 présente un premier tronçon d'extrémité 96.1 recouvrant au moins partiellement la première zone de recouvrement 94.1 du premier manchon 94 ainsi qu'un deuxième tronçon d'extrémité 96.2 recouvrant au moins partiellement la deuxième zone de recouvrement 94.2 du premier manchon 94. Selon un mode de réalisation, le système de raccordement déformable 92 comprend un premier anneau déformable 100.1 positionné entre la première zone de recouvrement 94.1 du premier manchon 94 et le premier tronçon d'extrémité 96.1 du deuxième manchon 96 ainsi qu'un deuxième anneau déformable 100.2 positionné entre la deuxième zone de recouvrement 94.2 du premier manchon 94 et le deuxième tronçon d'extrémité 96.2 du deuxième manchon 96. Ces anneaux déformables 100.1, 100.2 autorisent un mouvement entre la partie supérieure 88 et le deuxième manchon 96 ainsi qu'entre la partie inférieure 90 et le deuxième manchon 96. Ils permettent également de réduire les transferts de charge entre les parties supérieure et inférieure 88, 90. Le diamètre du deuxième manchon 96 étant réglable, le deuxième manchon 96 peut être utilisé pour comprimer légèrement les anneaux déformables 100.1, 100.2

Selon une configuration, le deuxième manchon 96 comprend un premier logement périphérique 102.1 positionné au niveau du premier tronçon extrémité 96.1, obtenu par pliage, configuré pour loger le premier anneau déformable 100.1 ainsi qu'un deuxième logement périphérique 102.2 positionné au niveau du deuxième tronçon d'extrémité 96.2, obtenu par pliage, configuré pour loger le deuxième anneau déformable 100.2.

Selon un mode de réalisation, le dispositif de conditionnement d'air 50 comprend un premier sous-ensemble 104 comportant la partie supérieure 88 du mélangeur 54 et une première partie du circuit de distribution 56, ce dernier comportant une deuxième partie non incluse dans le premier sous-ensemble 104, ainsi qu'un deuxième sous-ensemble 106 comportant la partie inférieure 90 du mélangeur 54 et une première partie du circuit de prélèvement 52, ce dernier comportant une deuxième partie non incluse dans le deuxième sous-ensemble 106.

Selon une configuration, le premier sous-ensemble 104, visible sur la figure 5, comprend la partie supérieure 88 du mélangeur 54 ainsi que les tronçons transversaux 84 reliés aux sorties d'air 64.1 à 64.4 du mélangeur 54. Ce premier sous-ensemble 104 forme un ensemble monobloc, sensiblement rigide.

Selon un mode opératoire, ce premier sous-ensemble 104 est assemblé en dehors du fuselage 42 puis introduit dans la zone inférieure 46.2 du fuselage 42.

Préalablement à la mise en place du premier sous-ensemble 104, les éléments de la deuxième partie du circuit de distribution 56 non incluse dans le premier sous-ensemble 104, comme les conduits de distribution longitudinaux 82 et les conduits de raccordement coudés 86 par exemple, sont montés et reliés à la structure de l'aéronef.

Une fois le premier sous-ensemble 104 positionné et relié à la structure de l'aéronef, chaque tronçon transversal 84 est relié au conduit de raccordement coudé 86 correspondant par un système de raccordement déformable 108. Ces systèmes de raccordement déformables 108 autorisent des mouvements relatifs entre les conduits assemblés et permettent de réduire les transferts de charge entre les conduits assemblés. Ainsi, pour chaque conduit positionné à cheval sur les première et deuxième parties du circuit de distribution 56 comportant des premier et deuxième tronçons positionnés respectivement dans les première et deuxième parties du circuit de distribution 56, lesdits premier et deuxième tronçons sont reliés entre eux par un système de raccordement déformable 108.

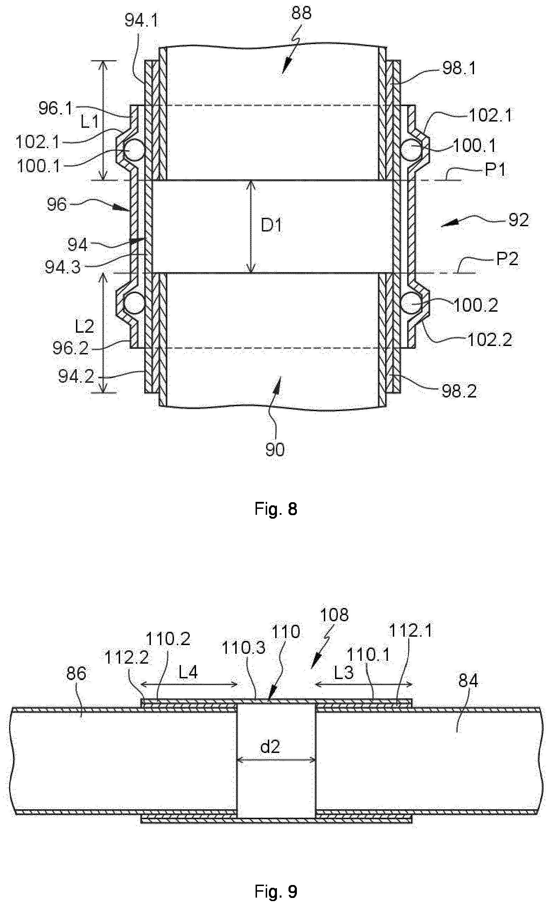

Selon un mode de réalisation visible sur la figure 9, le système de raccordement déformable 108 comprend un premier manchon 110 souple, enserrant le tronçon transversal 84 et le conduit de raccordement coudé 86, présentant une première zone de recouvrement 110.1 recouvrant l'extrémité du tronçon transversal 84 correspondant sur une longueur L3, une deuxième zone de recouvrement 110.2 recouvrant l'extrémité du conduit de raccordement coudé 86 correspondant sur une longueur L4 et une zone intermédiaire 110.3 reliant les première et deuxième zones de recouvrement 110.1, 110.2. Selon une configuration, le premier manchon 110 est thermorétractrable.

A titre indicatif, les longueurs L3 et L4 sont sensiblement égales à 15 mm.

Pour leur permettre de bouger l'un par rapport à l'autre, le tronçon transversal 84 et le conduit de raccordement coudé sont espacés d'une distance supérieure ou égale à environ 5 mm.

Selon un mode de réalisation, pour renforcer l'étanchéité, le système de raccordement déformable 108 comprend au moins une première bande adhésive 112.1 intercalée entre le tronçon transversal 84 et la première zone de recouvrement 110.1 du premier manchon 110 ainsi qu'au moins une deuxième bande adhésive 112.2 intercalée entre le conduit de raccordement coudé 86 et la deuxième zone de recouvrement 110.2 du premier manchon 110.

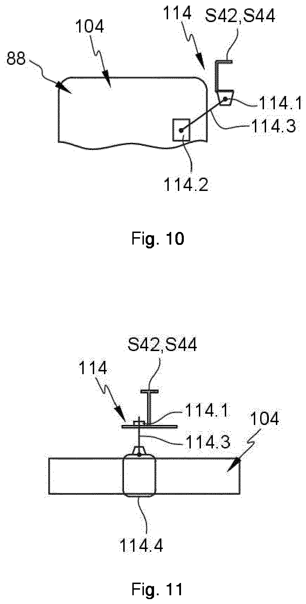

Selon un mode de réalisation visible sur la figure 10, le dispositif de conditionnement d'air 50 comprend au moins un système de liaison 114 configuré pour relier le premier sous-ensemble 104 à la structure de l'aéronef. Selon une configuration, le système de liaison 114 est réglable en longueur. Il comprend un premier point d'ancrage 114.1 solidaire de la structure de l'aéronef, un deuxième point d'ancrage 114.2 solidaire du premier sous-ensemble 104 ainsi qu'une tige réglable en longueur 114.3 reliant les premier et deuxième points d'ancrage 114.1, 114.2.

Selon un autre mode de réalisation visible sur la figure 11, le deuxième point d'ancrage 114.2 est remplacé par un collier 114.4 entourant un conduit du premier sous-ensemble 104.

Selon une configuration visible sur la figure 4, le deuxième sous-ensemble 106 comprend la partie inférieure 90 du mélangeur 54 ainsi que les portions de circuit 72.1, 72.2 reliées aux entrées d'air 62.1, 62.2 du mélangeur 54. Ce deuxième sous-ensemble 106 forme un ensemble monobloc, sensiblement rigide.

Selon un mode opératoire, ce deuxième sous-ensemble 106 est assemblé en dehors du fuselage 42 puis introduit dans la zone inférieure 46.2 du fuselage 42. Ce deuxième sous-ensemble 106 est positionné dans le fuselage 42 après la mise en place et la fixation du premier sous-ensemble 104 ainsi que des parties du circuit de prélèvement 52 non incluses dans le deuxième sous-ensemble 106, comme les conduits de prélèvement longitudinaux 70 par exemple.

Lors de son montage, le deuxième sous-ensemble 106 est positionné par rapport au premier sous-ensemble 104 puis raccordé à ce dernier par le système de raccordement déformable 92. En suivant, pour chaque conduit positionné à cheval sur les première et deuxième parties du circuit de prélèvement 52 comportant des premier et deuxième tronçons positionnés respectivement dans les première et deuxième parties du circuit de prélèvement 52, lesdits premier et deuxième tronçons sont reliés entre eux par un système de raccordement déformable 108, comme illustré sur la figure 9. Enfin, le deuxième sous-ensemble 106 est relié à la structure de l'aéronef par au moins un système de liaison 114 réglable en longueur, comme illustré sur la figure 10 et 11. En variante, le deuxième sous-ensemble 106 peut être relié à la structure de l'aéronef avant que les parties supérieure et inférieure 88, 90 ne soient raccordées entre elles.

Ainsi, l'aéronef comprend au moins un système de liaison 114 réglable en longueur reliant le premier ou deuxième sous-ensemble 104, 106 et la structure de l'aéronef.

Le fait de prévoir deux-sous-ensembles 104, 106 assemblés à l'extérieur du fuselage 14 permet de réduire le temps d'intervention sur la chaîne d'assemblage de l'aéronef. L'assemblage des premier et deuxième sous-ensembles 104, 106 n'étant pas réalisé dans un endroit exigu, comme la zone inférieure 46.2 du fuselage, il est rendu plus facile pour les opérateurs.

## Revendications

1. Dispositif de conditionnement d'air comprenant un circuit de prélèvement (52) configuré pour prélever de l'air présent dans une zone d'air conditionné (48), un mélangeur (54) configuré pour mélanger l'air prélevé dans la zone d'air conditionné (48) et un air régulé provenant d'une source d'air régulé ainsi qu'un circuit de distribution (56) configuré pour réinjecter l'air sortant du mélangeur (54) dans la zone d'air conditionné (48), le mélangeur (54) comportant un corps (58) s'étendant entre des extrémités inférieure et supérieure (58.1, 58.2), au moins une entrée d'air (62.1, 62.2) reliée au circuit de prélèvement (52) et positionnée à proximité de l'extrémité inférieure (58.1) ainsi qu'au moins une sortie d'air (64.1 à 64.4) reliée au circuit de distribution (56) et positionnée à proximité de l'extrémité supérieure (58.2), dans lequel au moins un orifice parmi l'entrée d'air (62.1, 62.2) et la sortie d'air (64.1 à 64.4) est positionné entre les extrémités inférieure et supérieure (58.1, 58.2), à proximité d'une des extrémités inférieure et supérieure (58.1, 58.2) obturée par une paroi transversale (P58.1, P58.2), dans lequel le corps (58) du mélangeur (54) comprend une partie supérieure (88) comportant l'extrémité supérieure (58.2) du corps (58) et présentant un premier plan de jonction (P1), une partie inférieure (90) comportant l'extrémité inférieure (58.1) du corps (58) et présentant un deuxième plan de jonction (P2) **caractérisé en ce que** le dispositif comprend un système de raccordement déformable (92) reliant de manière étanche les parties supérieure et inférieure (88, 90).

2. Dispositif de conditionnement d'air selon la revendication 1, dans lequel le mélangeur (54) comprend plusieurs entrées d'air (62.1, 62.2) et plusieurs sorties d'air (64.1 à 64.4), dans lequel toutes les entrées d'air (62.1, 62.2) et toutes les sorties d'air (64.1 à 64.4) sont positionnées entre les extrémités inférieure et supérieure (58.1, 58.2) et dans lequel les extrémités inférieure et supérieure (58.1, 58.2) sont obturées respectivement par des parois transversales inférieure et supérieure (P58.1, P58.2).

3. Dispositif de conditionnement d'air selon l'une des revendications précédentes, dans lequel le corps (58) du mélangeur (54) comporte une paroi latérale (S58) cylindrique, chaque sortie d'air (64.1 à 64.4) étant positionnée à proximité de l'extrémité supérieure (58.2) du corps (58) sur la paroi latérale (S58).

4. Dispositif de conditionnement d'air selon l'une des revendications précédentes, dans lequel le mélangeur (54) comprend au moins une excroissance (60.1, 60.2) communiquant avec le corps (58) et positionnée à proximité de l'extrémité inférieure (58.1) du corps (58), l'excroissance (60.1, 60.2) présentant une surface supérieure (S2) orientée vers l'extrémité supérieure (58.2) du corps (58) et dans lequel au moins une entrée d'air (62.1, 62.2) du mélangeur est positionnée sur la surface supérieure (S2) de l'excroissance (60.1, 60.2).

5. Dispositif de conditionnement d'air selon l'une des revendications précédentes, dans lequel le corps (58) étant orienté verticalement, les premier et deuxième plans de jonction (P1, P2) sont inclinés par rapport à un plan horizontal.

6. Dispositif de conditionnement d'air selon l'une des revendications précédentes, dans lequel le système de raccordement déformable (92) comprend :
- un premier manchon (94) souple, enserrant les parties supérieure et inférieure (88, 90), présentant une première zone de recouvrement (94.1) recouvrant la partie supérieure (88), une deuxième zone de recouvrement (94.2) recouvrant la partie inférieure (90) et une zone intermédiaire (94.3) reliant les première et deuxième zones de recouvrement (94.1, 94.2),
- un deuxième manchon (96) entourant le premier manchon (94) présentant une rigidité supérieure à celle du premier manchon (94) et un diamètre ajustable, comportant un premier tronçon d'extrémité (96.1) recouvrant au moins partiellement la première zone de recouvrement (94.1) du premier manchon (94) ainsi qu'un deuxième tronçon d'extrémité (96.2) recouvrant au moins partiellement la deuxième zone de recouvrement (94.2) du premier manchon (94),
- un premier anneau déformable (100.1) positionné entre la première zone de recouvrement (94.1) du premier manchon (94) et le premier tronçon d'extrémité (96.1) du deuxième manchon (96),
- un deuxième anneau déformable (100.2) positionné entre la deuxième zone de recouvrement (94.2) du premier manchon (94) et le deuxième tronçon d'extrémité (96.2) du deuxième manchon (96).

7. Dispositif de conditionnement d'air selon la revendication précédente, dans lequel le système de raccordement déformable (92) comprend au moins une première bande adhésive (98.1) intercalée entre la partie supérieure (88) et la première zone de recouvrement (94.1) du premier manchon (94) ainsi qu'au moins une deuxième bande adhésive (98.2) intercalée entre la partie inférieure (90) et la deuxième zone de recouvrement (94.2) du premier manchon (94).

8. Dispositif de conditionnement d'air selon l'une des revendications 6 ou 7, dans lequel le deuxième manchon (96) comprend un premier logement périphérique (102.1) positionné au niveau du premier tronçon extrémité (96.1) et configuré pour loger le premier anneau déformable (100.1) ainsi qu'un deuxième logement périphérique (102.2) positionné au niveau du deuxième tronçon d'extrémité (96.2) et configuré pour loger le deuxième anneau déformable (100.2).

9. Dispositif de conditionnement d'air selon l'une des
revendications précédentes, dans lequel le dispositif de conditionnement d'air (50) comprend un premier sous-ensemble (104) comportant la partie supérieure (88) du mélangeur (54) et une première partie du circuit de distribution (56), ce circuit de distribution (56) comportant une deuxième partie non incluse dans le premier sous-ensemble (104), ainsi qu'un deuxième sous-ensemble (106) comportant la partie inférieure (90) du mélangeur (54) et une première partie du circuit de prélèvement (52), ce circuit de prélèvement comportant une deuxième partie non incluse dans le deuxième sous-ensemble (106), et dans lequel chaque circuit de prélèvement ou de distribution (52, 56) comporte des premier et deuxième tronçons positionnés respectivement dans les première et deuxième parties du circuit de prélèvement ou de distribution (52, 56), le dispositif de conditionnement d'air (50) comprenant un système de raccordement déformable (108) reliant les premier et deuxième tronçons.

10. Aéronef comprenant un dispositif de conditionnement d'air selon l'une des revendications précédentes et dans lequel le dispositif de conditionnement d'air présente des premier et deuxième sous-ensembles (104, 106) et dans lequel l'aéronef comprend une structure et au moins un système de liaison (114) réglable en longueur reliant le premier ou deuxième sous-ensemble (104, 106) et la structure de l'aéronef.

11. Procédé de montage d'un dispositif de conditionnement d'air dans un aéronef selon la revendication 10, comprenant une structure, **caractérisé en ce que** le procédé comprend une étape d'assemblage des premier et deuxième sous-ensembles (104, 106) à l'extérieur de l'aéronef, une étape de montage des deuxièmes parties des circuits de prélèvement et de distribution (52, 56), une étape de mise en place du premier sous-ensemble (104) dans l'aéronef et de fixation du premier sous-ensemble (104) à la structure de l'aéronef puis une étape de mise en place du deuxième sous-ensemble (106) dans l'aéronef, une étape de fixation du deuxième sous-ensemble (106) à la structure de l'aéronef, une étape de raccordement des parties supérieure et inférieure (88, 90) du corps du mélangeur (54), une étape de raccordement des premier et deuxième tronçons des première et deuxième parties des circuits de prélèvement et de distribution (52, 56).

## Patentansprüche

1. Klimaanlage, umfassend einen Entnahmekreis (52), der dazu konfiguriert ist, in einem Klimatisierungsluftbereich (48) vorhandene Luft zu entnehmen, einen Mischer (54), der dazu konfiguriert ist, die aus dem Klimatisierungsluftbereich (48) entnommene Luft und eine von einer Regulierungsluftquelle stammende Luft zu mischen, und einen Verteilerkreis (56), der dazu konfiguriert ist, die aus dem Mischer (54) austretenden Luft wieder in den Klimatisierungsluftbereich (48) einzuleiten, wobei der Mischer (54) Folgendes umfasst: einen Körper (58), der sich zwischen einem unteren und einem oberen Ende (58.1, 58.2) erstreckt, mindestens einen Lufteinlass (62.1, 62.2), der mit dem Entnahmekreis (52) verbunden und in der Nähe des unteren Endes (58.1) positioniert ist, und mindestens einen Luftauslass (64.1 bis 64.4), der mit dem Verteilerkreis (56) verbunden und in der Nähe des oberen Endes (58.2) positioniert ist, wobei mindestens einer des Lufteinlasses (62.1, 62.2) und des Luftauslasses (64.1 bis 64.4) zwischen dem unteren Ende und dem oberen Ende (58.1, 58.2) in der Nähe eines des oberen Endes und des oberen Endes (58.1, 58.2), das durch eine Querwand (P58.1, P58.2) abgesperrt ist, positioniert ist, wobei der Körper (58) des Mischers (54) Folgendes umfasst: einen oberen Teil (88), der das obere Ende (58.2) des Körpers (58) aufweist und eine erste Verbindungsebene (P1) beinhaltet, und einen unteren Teil (90), der das untere Ende (58.1) des Körpers (58) aufweist und eine zweite Verbindungsebene (P2) beinhaltet, **dadurch gekennzeichnet, dass** die Vorrichtung ein verformbares Verbindungssystem (92) umfasst, das den oberen Teil und den unteren Teil (88, 90) abdichtend miteinander verbindet.

2. Klimaanlage nach Anspruch 1, wobei der Mischer (54) mehrere Lufteinlässe (62.1, 62.2) und mehrere Luftauslässe (64.1 bis 64.4) umfasst, wobei dass alle Lufteinlässe (62.1, 62.2) und alle Luftauslässe (64.1 bis 64.4) zwischen dem unteren Ende und dem oberen Ende (58.1, 58.2) positioniert sind und wobei dass das untere Ende und das obere Ende (58.1, 58.2) jeweils durch eine untere bzw. eine obere Querwand (P58.1, P58.2) abgesperrt sind.

3. Klimaanlage nach einem der vorangehenden Ansprüche, wobei der Körper (58) des Mischers (54) eine zylindrische Seitenwand (S58) aufweist, wobei jeder Luftauslass (64.1 bis 64.4) in der Nähe des oberen Endes (58.2) des Körpers (58) an der Seitenwand (S58) positioniert ist.

4. Klimaanlage nach einem der vorangehenden Ansprüche, wobei der Mischer (54) mindestens einen Vorsprung (60.1, 60.2) umfasst, der mit dem Körper (58) in Verbindung steht und in der Nähe des unteren Endes (58.1) des Körpers (58) positioniert ist, wobei der Vorsprung (60.1, 60.2) eine obere Fläche (S2) aufweist, die dem oberen Ende (58.2) des Körpers (58) zugewandt ist, und wobei dass mindestens ein Lufteinlass (62.1, 62.2) des Mischers an der oberen Fläche (S2) des Vorsprungs (60.1, 60.2) positioniert ist.

5. Klimaanlage nach einem der vorangehenden Ansprüche, wobei der Körper (58) vertikal ausgerichtet ist, wobei die erste und die zweite Verbindungsebene (P1, P2) in Bezug auf eine horizontale Ebene geneigt sind.

6. Klimaanlage nach einem der vorangehenden Ansprüche, wobei das verformbare Verbindungssystem (92) Folgendes umfasst:
- eine erste flexible Hülse (94), die den oberen und den unteren Teil (88, 90) umschließt und Folgendes aufweist: einen ersten Abdeckungsbereich (94.1), der den oberen Teil (88) abdeckt, einen zweiten Abdeckungsbereich (94.2), der den unteren Teil (90) abdeckt, und einen Zwischenbereich (94.3), der den ersten und den zweiten Abdeckungsbereich (94.1, 94.2) miteinander verbindet,
- eine zweite Hülse (96), die die erste Hülse (94) umgibt und eine höhere Steifigkeit als die erste Hülse (94) und einen einstellbaren Durchmesser aufweist, mit einem ersten Endabschnitt (96.1), der den ersten Abdeckungsbereich (94.1) der ersten Hülse (94) zumindest teilweise abdeckt, und einem zweiten Endabschnitt (96.2), der den zweiten Abdeckungsbereich (94.2) der ersten Hülse (94) zumindest teilweise abdeckt,
- einen ersten verformbaren Ring (100.1), der zwischen dem ersten Abdeckungsbereich (94.1) der ersten Hülse (94) und dem ersten Endabschnitt (96.1) der zweiten Hülse (96) positioniert ist,
- einen zweiten verformbaren Ring (100.2), der zwischen dem zweiten Abdeckungsbereich (94.2) der ersten Hülse (94) und dem zweiten Endabschnitt (96.2) der zweiten Hülse (96) positioniert ist.

7. Klimaanlage nach dem vorangehenden Anspruch, wobei das verformbare Verbindungssystem (92) mindestens einen ersten Klebestreifen (98.1), der zwischen dem oberen Teil (88) und dem ersten Abdeckungsbereich (94.1) der ersten Hülse (94) eingefügt ist, und mindestens einen zweiten Klebestreifen (98.2), der zwischen dem unteren Teil (90) und dem zweiten Abdeckungsbereich (94.2) der ersten Hülse (94) eingefügt ist, umfasst.

8. Klimaanlage nach einem der Ansprüche 6 oder 7, wobei die zweite Hülse (96) eine erste Umfangsaufnahme (102.1), die am ersten Endabschnitt (96.1) positioniert und dazu konfiguriert ist, den ersten verformbaren Ring (100.1) aufzunehmen, und eine zweite Umfangsaufnahme (102.2), die am zweiten Endabschnitt (96.2) positioniert und dazu konfiguriert ist, den zweiten verformbaren Ring (100.2) aufzunehmen, umfasst.

9. Klimaanlage nach einem der vorangehenden Ansprüche, wobei die Klimaanlage (50) Folgendes umfasst: eine erste Unterbaugruppe (104), die den oberen Teil (88) des Mischers (54) und einen ersten Teil des Verteilerkreises (56) aufweist, wobei der Verteilerkreis (56) einen zweiten Teil aufweist, der nicht in der ersten Unterbaugruppe (104) enthalten ist, sowie eine zweite Unterbaugruppe (106), die den unteren Teil (90) des Mischers (54) und einen ersten Teil des Entnahmekreises (52) aufweist, wobei der Entnahmekreis einen zweiten Teil aufweist, der nicht in der zweiten Unterbaugruppe (106) enthalten ist, und wobei dass jeder Entnahme- bzw. Verteilerkreis (52, 56) einen ersten und einen zweiten Abschnitt umfasst, die jeweils im ersten und zweiten Teil des Entnahme- bzw. Verteilerkreises (52, 56) positioniert sind, wobei die Klimaanlage (50) ein verformbares Verbindungssystem (108) umfasst, das den ersten und den zweiten Abschnitt miteinander verbindet.

10. Luftfahrzeug, umfassend eine Klimaanlage nach einem der vorangehenden Ansprüche, wobei die Klimaanlage eine erste und eine zweite Unterbaugruppe (104, 106) aufweist und wobei dass das Luftfahrzeug eine Struktur und mindestens ein längenverstellbares Verbindungssystem (114) umfasst, das die erste bzw. die zweite Unterbaugruppe (104, 106) und die Struktur des Luftfahrzeugs miteinander verbindet.

11. Verfahren zur Montage einer Klimaanlage in einem Luftfahrzeug nach Anspruch 10, **dadurch gekennzeichnet, dass** das Verfahren Folgendes umfasst: einen Schritt des Verbindens der ersten und der zweiten Unterbaugruppen (104, 106) außerhalb des Luftfahrzeugs, einen Schritt der Montage des zweites Teils des Entnahme- und des Verteilerkreises (52, 56), einen Schritt des Anordnens der ersten Unterbaugruppe (104) im Luftfahrzeug und des Befestigens der ersten Unterbaugruppe (104) an der Struktur des Luftfahrzeugs und anschließend einen Schritt des Anordnens der zweiten Unterbaugruppe (106) im Luftfahrzeug, einen Schritt des Befestigens der zweiten Unterbaugruppe (106) an der Struktur des Luftfahrzeugs, einen Schritt des Verbindens des oberen und des unteren Teils (88, 90) des Körpers des Mischers (54) und einen Schritt des Verbindens des ersten und des zweiten Abschnitts des ersten und des zweiten Teils des Entnahme- und Verteilerkreises (52, 56).

## Claims

1. Air conditioning device comprising a withdrawing circuit (52) configured to withdraw air present in a conditioned-air zone (48), a mixer (54) configured to mix the air withdrawn from the conditioned-air zone (48) with regulated air coming from a regulated-air source, and a distribution circuit (56) configured to re-inject the air exiting the mixer (54) into the conditioned-air zone (48), the mixer (54) comprising a body (58) extending between lower and upper ends (58.1, 58.2), at least one air inlet (62.1, 62.2) connected to the withdrawing circuit (52) and positioned in the vicinity of the lower end (58.1), and at least one air outlet (64.1 to 64.4) connected to the distribution circuit (56) and positioned in the vicinity of the upper end (58.2), wherein at least one orifice from among the air inlet (62.1, 62.2) and the air outlet (64.1 to 64.4) is positioned between the lower and upper ends (58.1, 58.2), in the vicinity of one of the lower and upper ends (58.1, 58.2) that is closed off by a transverse wall (P58.1, P58.2), wherein the body (58) of the mixer (54) comprises an upper part (88) comprising the upper end (58.2) of the body (58) and having a first junction plane (P1), a lower part (90) comprising the lower end (58.1) of the body (58) and having a second junction plane (P2), **characterized in that** the device comprises a deformable connection system (92) connecting the upper and lower parts (88, 90) in a sealed manner.

2. Air conditioning device according to Claim 1, wherein the mixer (54) comprises a plurality of air inlets (62.1, 62.2) and a plurality of air outlets (64.1 to 64.4), wherein the air inlets (62.1, 62.2) and all the air outlets (64.1 to 64.4) are positioned between the lower and upper ends (58.1, 58.2), and wherein the lower and upper ends (58.1, 58.2) are closed off respectively by lower and upper transverse walls (P58.1, P58.2).

3. Air conditioning device according to either of the preceding claims, wherein the body (58) of the mixer (54) comprises a cylindrical lateral wall (S58), each air outlet (64.1 to 64.4) being positioned in the vicinity of the upper end (58.2) of the body (58) on the lateral wall (S58).

4. Air conditioning device according to one of the preceding claims, wherein the mixer (54) comprises at least one protrusion (60.1, 60.2) that communicates with the body (58) and that is positioned in the vicinity of the lower end (58.1) of the body (58), the protrusion (60.1, 60.2) having an upper surface (S2) oriented toward the upper end (58.2) of the body (58), and wherein at least one air inlet (62.1, 62.2) of the mixer is positioned on the upper surface (S2) of the protrusion (60.1, 60.2).

5. Air conditioning device according to one of the preceding claims, wherein, the body (58) being oriented vertically, the first and second junction planes (P1, P2) are inclined with respect to a horizontal plane.

6. Air conditioning device according to one of the preceding claims, wherein the deformable connection system (92) comprises:
- a first, flexible sleeve (94), surrounding the upper and lower parts (88, 90), having a first zone of overlap (94.1) overlapping the upper part (88), a second zone of overlap (94.2) overlapping the lower part (90) and an intermediate zone (94.3) connecting the first and second zones of overlap (94.1, 94.2),
- a second sleeve (96) surrounding the first sleeve (94), having a rigidity greater than that of the first sleeve (94) and an adjustable diameter, comprising a first end segment (96.1) at least partially overlapping the first zone of overlap (94.1) of the first sleeve (94) and a second end segment (96.2) at least partially overlapping the second zone of overlap (94.2) of the first sleeve (94),
- a first deformable ring (100.1) positioned between the first zone of overlap (94.1) of the first sleeve (94) and the first end segment (96.1) of the second sleeve (96),
- a second deformable ring (100.2) positioned between the second zone of overlap (94.2) of the first sleeve (94) and the second end segment (96.2) of the second sleeve (96).

7. Air conditioning device according to the preceding claim, wherein the deformable connection system (92) comprises at least a first adhesive tape (98.1) interposed between the upper part (88) and the first zone of overlap (94.1) of the first sleeve (94), and at least a second adhesive tape (98.2) interposed between the lower part (90) and the second zone of overlap (94.2) of the first sleeve (94).

8. Air conditioning device according to either of Claims 6 and 7, wherein the second sleeve (96) comprises a first peripheral recess (102.1) positioned at the first end segment (96.1) and configured to accommodate the first deformable ring (100.1), and a second peripheral recess (102.2) positioned at the second end segment (96.2) and configured to accommodate the second deformable ring (100.2).

9. Air conditioning device according to one of the preceding claims, wherein the air conditioning device (50) comprises a first sub-assembly (104) comprising the upper part (88) of the mixer (54) and a first part of the distribution circuit (56), this distribution circuit (56) comprising a second part that is not included in the first sub-assembly (104), and a second sub-assembly (106) comprising the lower part (90) of the mixer (54) and a first part of the withdrawing circuit (52), this withdrawing circuit comprising a second part that is not included in the second sub-assembly (106), and wherein each withdrawing or distribution circuit (52, 56) comprises first and second segments that are positioned respectively in the first and second parts of the withdrawing or distribution circuit (52, 56), the air conditioning device (50) comprising a deformable connection system (108) connecting the first and second segments.

10. Aircraft comprising an air conditioning device according to one of the preceding claims and wherein the air conditioning device has first and second sub-assemblies (104, 106) and wherein the aircraft comprises a structure and at least one length-adjustable connecting system (114) connecting the first or second sub-assembly (104, 106) and the structure of the aircraft.

11. Method for installing an air conditioning device in an aircraft according to Claim 10, **characterized in that** the method comprises a step of assembling first and second sub-assemblies (104, 106) outside the aircraft, a step of installing second parts of the withdrawing and distribution circuits (52, 56), a step of fitting the first sub-assembly (104) in the aircraft and of fastening the first sub-assembly (104) to the structure of the aircraft, then a step of fitting the second sub-assembly (106) in the aircraft, a step of fastening the second sub-assembly (106) to the structure of the aircraft, a step of connecting upper and lower parts (88, 90) of the body of the mixer (54), a step of connecting first and second segments of the first and second parts of the withdrawing and distribution circuits (52, 56).
